# EUROPEAN PATENT APPLICATION

(11) **EP 4 597 796 A1**
(43) Date of publication of application: **06.08.2025**
(21) Application number: 24220165.5
(22) Date of filing: 16.12.2024
(51) Int. Cl.: H02K 1/06, H02K 5/04, H02K 15/028

(54) **MOTOR AND PRODUCTION METHOD OF MOTOR**

(30) Priority: 31.01.2024 JP 2024013239
(71) Applicant: TOYOTA JIDOSHA KABUSHIKI KAISHA, Toyota-shi, Aichi-ken 471-8571 (JP)
(72) Inventor: TAKAHARA, Yoshihiro, Toyota-shi, 471-8571 (JP); SUZUKI, Yasunori, Toyota-shi, 471-8571 (JP); YOSHIOKA, Kentaro, Toyota-shi, 471-8571 (JP); ASAOKA, Hironori, Toyota-shi, 471-8571 (JP); DEGUCHI, Junichi, Toyota-shi, 471-8571 (JP); WATANABE, Kohei, Toyota-shi, 471-8571 (JP); TAKAMURA, Yasuyuki, Toyota-shi, 471-8571 (JP)
(74) Representative: J A Kemp LLP

(57) **Abstract**

A motor (10) includes: a housing (12) that includes an inner circumferential surface (38) having a cylindrical shape; and a stator (18) that includes an outer circumferential surface (20) that abuts on the inner circumferential surface (38) from an inner side in a radial direction. The stator (18) includes grooves (22) on the outer circumferential surface (20), the grooves (22) each extending along an axial direction and being arrayed along a circumferential direction. The housing (12) includes at least one protrusion (40A) on the inner circumferential surface (38), the protrusion (40A) abutting on an inner surface of one of the grooves (22). The grooves (22) include at least one first groove (24) on which the protrusion (40A) abuts and a second groove (26) on which the protrusion (40A) does not abut.

## Description

### BACKGROUND OF THE INVENTION

### 1. Field of the Invention

The present disclosure relates to a motor and a production method of the motor.

### 2. Description of Related Art

Japanese Unexamined Patent Application Publication No. 2022-172196 (JP 2022-172196 A) discloses a motor. The motor includes a housing that includes an inner circumferential surface having a cylindrical shape and a stator that includes an outer circumferential surface that abuts on the inner circumferential surface of the housing from an inner side in a radial direction.

### SUMMARY OF THE INVENTION

The motor in JP 2022-172196 A further includes a pin that extends along an axial direction. The pin is fit in the outer circumferential surface of the stator and the inner circumferential surface of the housing, and thereby, the positioning of the housing and the stator in a circumferential direction is performed. Therefore, for the motor in JP 2022-172196 A, when the motor is produced, it is necessary to exactly determine the circular position of the outer circumferential surface of the stator and the circular position of the inner circumferential surface of the housing.

The present disclosure provides a technology that makes it possible to easily perform the positioning of the housing and the stator in the circumferential direction.

In an aspect of the present disclosure, a motor includes: a housing that includes an inner circumferential surface having a cylindrical shape; and a stator that includes an outer circumferential surface that abuts on the inner circumferential surface from an inner side in a radial direction. The stator includes grooves on the outer circumferential surface, the grooves each extending along an axial direction and being arrayed along a circumferential direction. The housing includes at least one protrusion on the inner circumferential surface, the protrusion abutting on an inner surface of one of the grooves. The grooves include at least one first groove on which the protrusion abuts and a second groove on which the protrusion does not abut.

In the above configuration, the outer circumferential surface of the stator abuts on the inner circumferential surface of the housing from the inner side in the radial direction, and the housing holds the stator by the pressure that acts on the stator from the housing. In such a configuration, when the pressure that acts on the stator is excessively high, there is a fear that the magnetic property of the stator unintentionally changes. In this regard, in the above configuration, the grooves are formed on the outer circumferential surface of the stator, and thereby, the pressure that acts on the stator is moderately relaxed. In addition, the grooves include the first groove where the protrusion provided on the housing exists and the second groove where the protrusion does not exist. In this configuration, when the motor is produced, it is possible to easily perform the positioning of the housing and the stator in the circumferential direction, while utilizing the function of the stress relaxation by the grooves.

The protrusion and the first groove may partially contact with each other.

In the above configuration, it is possible to significantly relax the pressure that acts on the stator, even at the first groove that abuts on the protrusion of the housing.

The protrusion and the first groove may wholly contact with each other.

In the above configuration, it is possible to exactly perform the positioning of the housing and the stator in the circumferential direction.

The housing may include a plurality of the protrusions on the inner circumferential surface. The plurality of protrusions may be arrayed at regular intervals in the circumferential direction.

In the above configuration, it is possible to enhance the accuracy of the alignment between the stator and the housing.

The grooves may be arrayed at regular intervals in the circumferential direction.

In the above configuration, it is possible to equalize the pressure that acts on the stator.

The protrusion may extend along the axial direction.

In the above configuration, it is possible to enhance the accuracy of the alignment between the stator and the housing.

The protrusion may include a taper section where a protrusion height from the inner circumferential surface increases toward one side in the axial direction.

In the above configuration, it is easy to dispose the protrusion of the housing in the first groove of the stator when the housing and the stator are assembled.

The housing may hold the stator by interference fit.

In the above configuration, it is possible to securely fix the stator to the housing. For example, the above configuration can be realized by shrinkage fit, cooling fit, press fit, or the like.

In another aspect of the present disclosure, a production method of a motor includes: expanding an inner circumferential surface of a housing to an outer side in a radial direction; disposing an outer circumferential surface of a stator such that the outer circumferential surface faces the inner circumferential surface of the housing; and contracting the inner circumferential surface of the housing, to cause the inner circumferential surface to abut on the outer circumferential surface of the stator. The stator includes grooves on the outer circumferential surface, the grooves each extending along an axial direction and being arrayed along a circumferential direction. The housing includes at least one protrusion on the inner circumferential surface, the protrusion abutting on an inner surface of one of the grooves. When the stator is disposed so as to face the housing, positioning of the housing and the stator in the circumferential direction is performed such that the protrusion faces the groove. When the housing is caused to abut on the stator, the protrusion is caused to abut on at least one first groove of the grooves and not to abut on a second groove of the grooves.

In the above configuration, it is possible to perform the positioning of the housing and the stator in the circumferential direction, while utilizing the function of the stress relaxation by the grooves.

When the housing is caused to abut on the stator, the housing and the stator may be relatively displaced in the circumferential direction, by force that is generated between the protrusion and an inner surface of the first groove that abut on each other.

In the state where the outer circumferential surface of the stator is disposed so as to face the expanded inner circumferential surface of the housing, the circumferential position of the stator relative to the housing sometimes slightly deviates from a desired position. In the above configuration, the housing and the stator are relatively displaced in the circumferential direction, and thereby, it is possible to move the stator to the desired position.

When the housing is caused to abut on the stator, at least a part of the protrusion may be plastically deformed by abutting on the first groove.

In the above configuration, the contact area between the protrusion and the first groove increases, and therefore, it is possible to securely fix the stator to the housing.

When the housing is caused to abut on the stator, the first groove may be filled with the protrusion without space.

In the above configuration, the contact area between the protrusion and the first groove increases, and therefore, it is possible to securely fix the stator to the housing.

When the housing is caused to abut on the stator, the protrusion may be configured not to plastically deformed.

In the above configuration, it is possible to reduce the contact area between the protrusion and the inner surface of the first groove, compared to the configuration in which the protrusion is plastically deformed. Accordingly, it is possible to further relax the pressure that acts on the stator.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view of a drive device 2 according to a first embodiment along a direction perpendicular to an axial direction;
FIG. 2 is a sectional view of the drive device 2 according to the first embodiment along the axial direction;
FIG. 3 is a sectional view of a motor 10 according to the first embodiment in a production process along the direction perpendicular to the axial direction;
FIG. 4 is a sectional view of the motor 10 according to the first embodiment in the production process along the axial direction;
FIG. 5 is a sectional view of the motor 10 according to the first embodiment in the production process along the axial direction;
FIG. 6 is a sectional view of a drive device 202 according to a second embodiment along the axial direction;
FIG. 7 is a sectional view of a motor 210 according to the second embodiment in a production process along the axial direction;
FIG. 8 is a sectional view of a drive device 302 according to a third embodiment along the axial direction; and
FIG. 9 is a sectional view of a motor 310 according to the third embodiment in a production process along the axial direction.

### DETAILED DESCRIPTION OF EMBODIMENTS

### FIRST EMBODIMENT

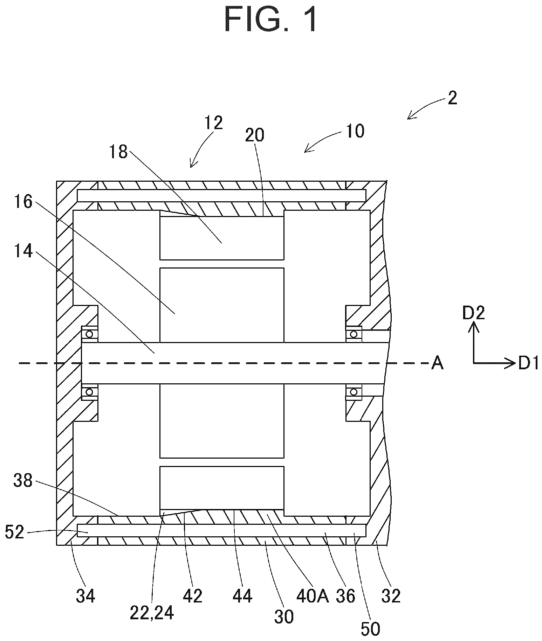

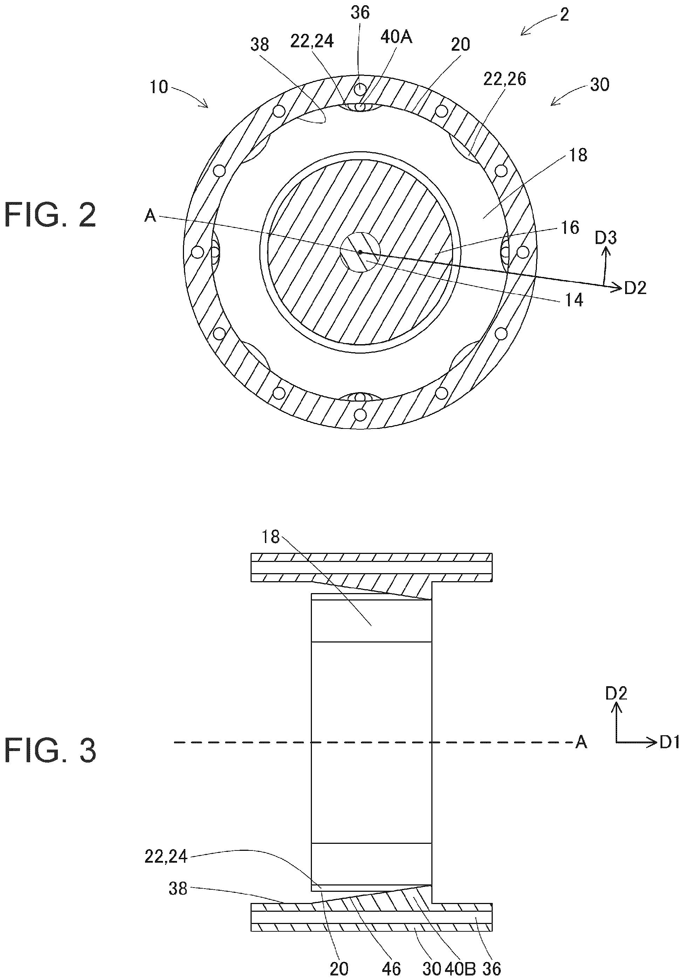

A drive device 2 will be described with reference to FIG. 1 and FIG. 2. The drive device 2 includes a motor 10, and is equipped in an electrified vehicle or the like. In the present specification, a cylindrical coordinate system having an axial direction D1, a radial direction D2, and a circular direction D3 is defined on the basis of the rotation axis A of the motor 10. The axial direction D1 is a direction parallel to the rotation axis A, a coordinate axis for the axial direction D1 is defined on the rotation axis. The radial direction D2 is a direction perpendicular to the axial direction D1, and is defined as a coordinate axis for which the origin is on the rotation axis A. Moreover, the circular direction D3 is a direction perpendicular to the axial direction D1 and the radial direction D2, and is defined as a coordinate axis that circles around the rotation axis A.

As shown in FIG. 1, the motor 10 includes a housing 12, a shaft 14, a rotor 16, and a stator 18. The shaft 14, the rotor 16, and the stator 18 are housed in the housing 12. Although not illustrated, the drive device 2 further includes a gear unit that is mechanically connected to the motor 10. The gear unit is disposed on one side of the motor 10 in the axial direction D1. The one side in the axial direction D1 is the right side in FIG. 1.

The shaft 14 extends along the rotation axis A. The rotation axis A is the rotation center of the shaft 14. The shaft 14 is supported in the housing 12 by a bearing, in a rotatable manner. The rotor 16 is fixed to the shaft 14. The stator 18 is fixed to the housing 12 by shrinkage fit. The stator 18 is made of a metal material such as iron and steel. As shown in FIG. 2, a plurality of grooves 22 each of which extends along the axial direction D1 is provided on an outer circumferential surface 20 of the stator 18. The plurality of grooves 22 has a shape that curves along a circular arc, as viewed along the axial direction D1. The plurality of grooves 22 is arrayed at regular intervals along the circular direction D3. In the embodiment, eight grooves 22 are provided on the outer circumferential surface 20. The eight grooves 22 include four first grooves 24 in each of which a later-described first protrusion 40A exists in the interior, and four second grooves 26 in each of which the first protrusion 40A does not exist in the interior. The first groove 24 and the second groove 26 are alternately arrayed in the circular direction D3.

The housing 12 in FIG. 1 is made of a metal material such as aluminum. The housing 12 is made of a material that has a lower hardness than the stator 18. The housing 12 includes a central housing 30, a first cover 32, and a second cover 34. The central housing 30 has a cylindrical shape. The central housing 30 extends along the axial direction D1. Both ends of the central housing 30 in the axial direction D1 are opened. The first cover 32 is attached to an end portion on one side of the central housing 30 in the axial direction D1. The second cover 34 is attached to an end portion on the other side of the central housing 30 in the axial direction D1.

As shown in FIG. 2, a plurality of axial flow passages 36 each of which passes through the central housing 30 in the axial direction D1 is formed in the central housing 30. The plurality of axial flow passages 36 extends along the axial direction D1. The plurality of axial flow passages 36 is arrayed at regular intervals in the circular direction D3. A plurality of first protrusions 40A each of which protrudes to the inner side in the radial direction D2 is provided on an inner circumferential surface 38 of the central housing 30. The plurality of first protrusions 40A extends along the axial direction D1. The plurality of first protrusions 40A is arrayed at regular intervals in the circular direction D3. In the embodiment, four first protrusions 40A are provided on the inner circumferential surface 38. The first protrusion 40A is disposed in the interior of the first groove 24 of the stator 18. That is, the first protrusion 40A exists in the interior of the first groove 24 of the stator 18. The first protrusion 40A abuts on an inner surface of the first groove 24. The first protrusion 40A and the first groove 24 contact with each other with space. That is, space exists between the first protrusion 40A and the inner surface of the first groove 24. As shown in FIG. 1, the first protrusion 40A includes a taper section 42 and a flat section 44. The taper section 42 is a section where the protrusion height from the inner circumferential surface 38 increases toward one side in the axial section D1. The protrusion height is a length on the inner side in the radial direction D2. The flat section 44 is a section where the protrusion height is constant. At the flat section 44, the first protrusion 40A abuts on the inner surface of the first groove 24. As shown in FIG. 2, the first protrusion 40A at the taper section 42 has a shape that curves along a circular arc, as viewed along the axial direction D1. Further, the first protrusion 40A at the flat section 44 has such a shape that a shape curving along a circular art has been squashed, as viewed along the axial direction D1.

As shown in FIG. 1, a plurality of first circumferential flow passages 50 is formed in the first cover 32. The plurality of first circumferential flow passages 50 is arrayed along the circular direction D3. The first circumferential flow passage 50 connects two axial flow passages 36 that are adjacent to each other in the circular direction D3. Although not illustrated, a supply flow passage to which a refrigerant is supplied is connected to one first circumferential flow passage 50 of the plurality of first circumferential flow passages 50. Further, a discharge flow passage through which the refrigerant is discharged to the exterior is connected to one first circumferential flow passage 50 of the plurality of first circumferential flow passages 50.

A plurality of second circumferential flow passages 52 is formed in the second cover 34. The plurality of second circumferential flow passages 52 is arrayed along the circular direction D3. The second circumferential flow passage 52 connects two axial flow passages 36 that are adjacent to each other in the circular direction D3. The plurality of first circumferential flow passages 50, the plurality of axial flow passages 36, and the plurality of second circumferential flow passages 52 form one refrigerant system through which the refrigerant for cooling the motor 10 flows.

### PRODUCTION METHOD OF MOTOR 10

A production method of the motor 10 will be described with reference to FIG. 1 to FIG. 4. The embodiment is characterized by a step of fixing the stator 18 to the central housing 30 of the housing 12. Therefore, only the step of fixing the stator 18 to the housing 12 will be described.

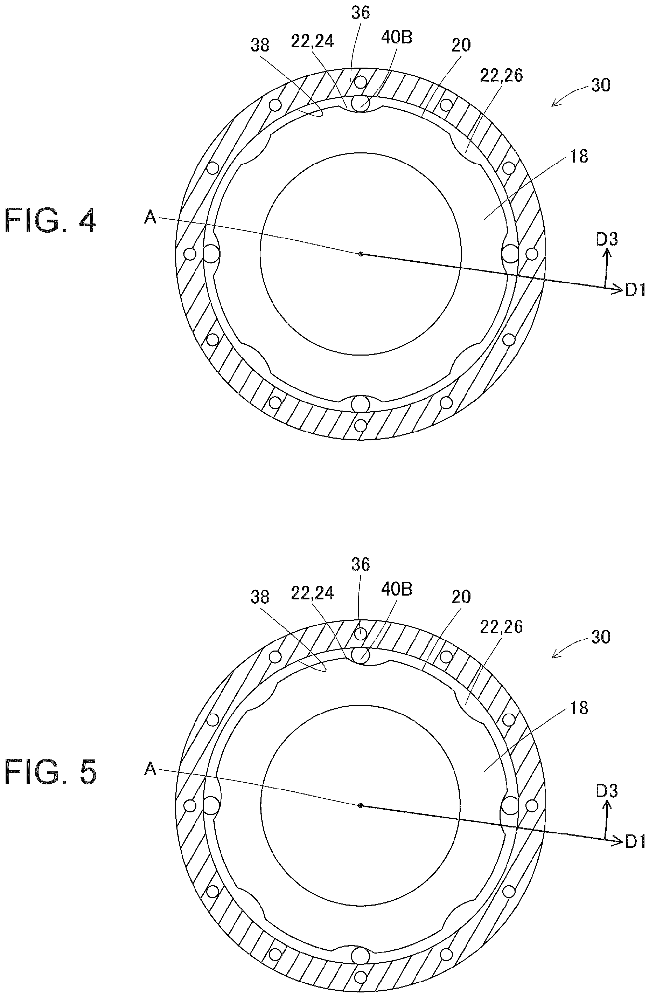

First, as shown in FIG. 3, the inner circumferential surface 38 of the central housing 30 is temporarily expanded to the outer side in the radial direction D2, by heating the central housing 30 of the housing 12. In a state before the stator 18 is fixed to the central housing 30, the inner circumferential surface 38 is provided with second protrusions 40B each of which includes only the taper section 46 and includes no flat section. The taper section 46 is a section where the protrusion height from the inner circumferential surface 38 increases toward one side in the axial direction D1. Further, as shown in FIG. 4, the second protrusion 40B has a shape that curves along a circular arc. The curvature radius of the second protrusion 40B is smaller than the curvature radius of the groove 22 of the stator 18. The inner circumferential surface 38 is enlarged such that an end portion on the inner side of the taper section 46 of the second protrusion 40B in the radial direction D2 coincides with an innermost portion of the groove 22 of the stator 18.

Next, the positioning of the central housing 30 and the stator 18 in the circular direction D3 is performed such that the second protrusion 40B of the inner circumferential surface 38 of the central housing 30 faces the first groove 24 of the stator 18. Next, the stator 18 is moved in the axial direction D1, and thereby, the outer circumferential surface 20 of the stator 18 is disposed so as to face the expanded inner circumferential surface 38 of the central housing 30. Thereby, the second protrusion 40B of the inner circumferential surface 38 of the central housing 30 faces the first groove 24 of the stator 18. In FIG. 4, the positioning is performed such that the position of a central portion of the second protrusion 40B in the circular direction D3 coincides with the position of a central portion of the first groove 24 in the circular direction D3.

Next, the central housing 30 is cooled, and thereby, the inner circumferential surface 38 of the central housing 30 is contracted to the inner side in the radial direction D2. As described above, the hardness of the central housing 30 is lower than the hardness of the stator 18. Thus, the second protrusion 40B of the central housing 30 that abuts on the inner surface of the first groove 24 of the stator 18 is squashed by the contraction of the inner circumferential surface 38. That is, the second protrusion 40B is plastically deformed, and is changed into the first protrusion 40A in FIG. 2. Further, the contraction of the inner circumferential surface 38 causes a part of the inner circumferential surface 38 to abut on the outer circumferential surface 20 of the stator 18. At this portion, the stress due to the thermal contraction acts on the stator 18. Thereby, the stator 18 is fixed to the central housing 30. That is, the central housing 30 holds the stator 18 by shrinkage fit.

In the above description, as shown in FIG. 4, when the outer circumferential surface 20 of the stator 18 is disposed so as to face the expanded inner circumferential surface 38 of the central housing 30, the position of the central portion of the second protrusion 40B in the circular direction D3 coincides with the position of the central portion of the first groove 24 in the circular direction D3. However, in some cases, as shown in FIG. 5, the position of the central portion of the second protrusion 40B in the circular direction D3 does not coincide with the position of the central portion of the first groove 24 in the circular direction D3. In such a situation, when the central housing 30 is cooled, the central housing 30 and the stator 18 are relatively displaced in the circular direction D3, by the force that is generated between the second protrusion 40B and the inner surface of the first groove 24 that abut on each other. Specifically, the central housing 30 and the stator 18 are relatively displaced, such that the position of the central portion of the first groove 24 in the circular direction D3 coincides with the position of the central portion of the second protrusion 40B in the circular direction D3, Further, similarly to the above description, the second protrusion 40B is plastically deformed, and the stress due to the thermal contraction acts on the stator 18. Thereby, the alignment of the central housing 30 and the stator 18 is performed, and the stator 18 is fixed to the central housing 30.

As described above, the motor 10 includes the housing 12 that includes the inner circumferential surface 38 having a cylindrical shape, and the stator 18 that includes the outer circumferential surface 20 that abuts on the inner circumferential surface 38 from the inner side in the radial direction D2, as shown in FIG. 1 and FIG. 2. The plurality of grooves 22 each of which extends along the axial direction D1 and that are arrayed along the circular direction D3 is provided on the outer circumferential surface 20 of the stator 18. At least one first protrusion 40A (an example of the "protrusion") that abuts on the inner surface of one of the plurality of grooves 22 is provided on the inner circumferential surface 38 of the housing 12. The plurality of grooves 22 includes at least one first groove 24 where the first protrusion 40A exists and the second groove 26 where the first protrusion 40A does not exist.

In the above configuration, the outer circumferential surface 20 of the stator 18 abuts on the inner circumferential surface 38 of the housing 12 from the inner side in the radial direction D2, and the housing 12 holds the stator 18 by the pressure that acts on the stator 18 from the housing 12. In such a configuration, when the pressure that acts on the stator 18 is excessively high, there is a fear that the magnetic property of the stator 18 unintentionally changes. In this regard, in the above configuration, the plurality of grooves 22 is formed on the outer circumferential surface 20 of the stator 18, and thereby, the pressure that acts on the stator 18 is moderately relaxed. In addition, the plurality of grooves 22 includes the first groove 24 where the first protrusion 40A provided on the housing 12 exists and the second groove 26 where the protrusion does not exist. In this configuration, when the motor 10 is produced, it is possible to easily perform the positioning of the housing 12 and the stator 18 in the circular direction D3, while utilizing the function of the stress relaxation by the plurality of grooves 22.

Further, as shown in FIG. 2, the first protrusion 40A and the first groove 24 contact with each other with the space.

In the above configuration, it is possible to significantly relax the pressure that acts on the stator 18, even at the first groove 24 that abuts on the first protrusion 40A of the housing 12.

Further, as shown in FIG. 2, the plurality of first protrusions 40A is provided on the inner circumferential surface 38 of the housing 12. The plurality of first protrusions 40A is arrayed at regular intervals in the circumferential direction.

In the above configuration, it is possible to enhance the accuracy of the alignment between the stator 18 and the housing 12.

Further, as shown in FIG. 2, the plurality of grooves 22 is arrayed at regular intervals in the circumferential direction.

In the above configuration, it is possible to equalize the pressure that acts on the stator 18.

Further, as shown in FIG. 1, the first protrusion 40A extends along the axial direction D 1.

In the above configuration, it is possible to enhance the accuracy of the alignment between the stator 18 and the housing 12.

Further, as shown in FIG. 1, the first protrusion 40A includes the taper section 42 where the protrusion height from the inner circumferential surface 38 increases toward one side in the axial direction D1.

In the above configuration, it is easy to dispose the first protrusion 40A of the housing 12 in the first groove 24 of the stator 18 when the housing 12 and the stator 18 are assembled.

Further, the housing 12 holds the stator 18 by shrinkage fit (an example of the "interference fit").

In the above configuration, it is possible to securely fix the stator 18 to the housing 12.

Further, as shown in FIG. 1 to FIG. 4, the production method for the motor 10 includes the step of expanding the inner circumferential surface 38 of the housing 12 to the outer side in the radial direction D2, the step of disposing the outer circumferential surface 20 of the stator 18 such that the outer circumferential surface 20 of the stator 18 faces the expanded inner circumferential surface 38 of the housing 12, and the step of contracting the inner circumferential surface 38 of the housing 12, to cause the inner circumferential surface 38 to abut on the outer circumferential surface 20 of the stator 18.

In the above configuration, it is possible to perform the positioning of the housing 12 and the stator 18 in the circumferential direction, while utilizing the function of the stress relaxation by the plurality of grooves 22.

Further, in the step of causing the inner circumferential surface 38 to abut on the outer circumferential surface 20 of the stator 18, the housing 12 and the stator 18 are relatively displaced in the circumferential direction, by the force that is generated between the second protrusion 40B (an example of the "protrusion") and the inner surface of the first groove 24.

In the state where the outer circumferential surface 20 of the stator 18 is disposed so as to face the expanded inner circumferential surface 38 of the housing 12, the position of the stator 18 in the circular direction D3 relative to the housing 12 sometimes slightly deviates from a desired position. In the above configuration, the housing 12 and the stator 18 are relatively displaced in the circular direction D3, and thereby, it is possible to move the position of the stator 18 in the circular direction D3 to the desired position.

Further, in the step of causing the inner circumferential surface 38 to abut on the outer circumferential surface 20 of the stator 18, at least a part of the second protrusion 40B is plastically deformed by the abutting on the first groove 24.

In the above configuration, the contact area between the second protrusion 40B and the first groove 24 increases, and therefore, it is possible to securely fix the stator 18 to the housing 12. Further, as described above, in the configuration in which the stator 18 is cooled using the refrigerant system of the housing 12, it is possible to enhance the cooling performance.

### SECOND EMBODIMENT

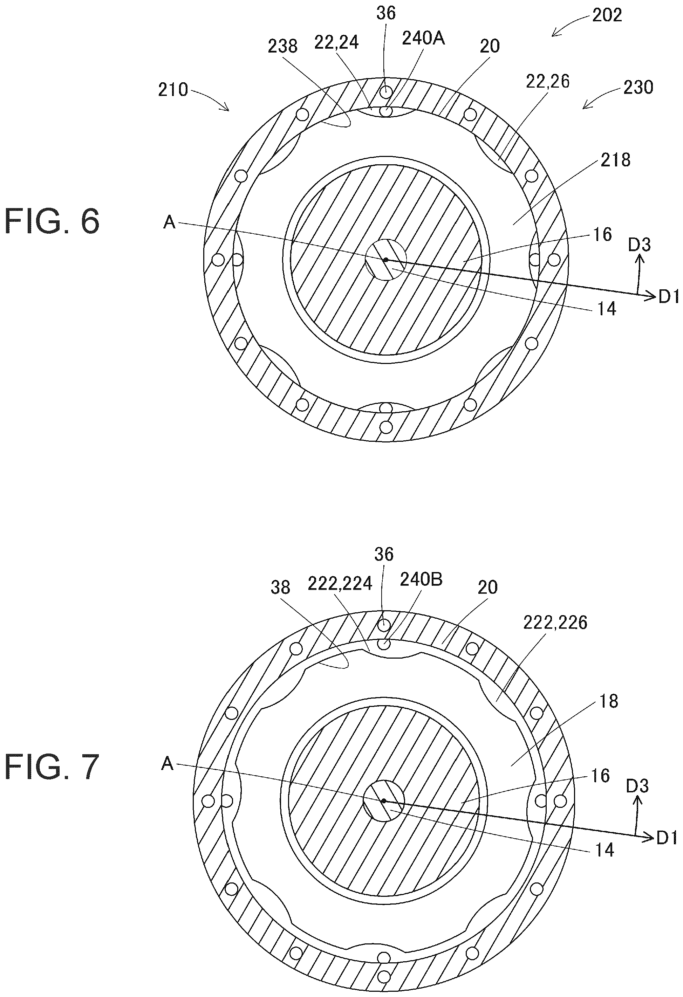

A drive device 202 in a second embodiment will be described with reference to FIG. 6. In the drive device 202 in the embodiment, the configuration of a central housing 230 of a motor 210 is different from the configuration of the central housing 30 of the motor 10 in the first embodiment. Hereinafter, constitutions that are common between the embodiments are denoted by identical reference characters, and the descriptions thereof are omitted.

A plurality of first protrusions 240A that protrudes to the inner side in the radial direction D2 is provided on an inner circumferential surface 238 of the central housing 230. The plurality of first protrusions 240A extends along the axial direction D1. The plurality of first protrusions 240A is arrayed at regular intervals in the circular direction D3. In the embodiment, four first protrusions 240A are provided on the inner circumferential surface 238. The first protrusions 240A is disposed in the interior of the first groove 24 of the stator 18. The first protrusions 240A abuts on the inner surface of the first groove 24. The first protrusion 240A and the first groove 24 contact with each other with space. That is, space exists between the first protrusion 240A and the inner surface of the first groove 24. The first protrusion 240A abuts on the inner surface of the first groove 24, from an end portion on one side of the stator 18 in the axial direction D1 to an end portion on the other side of the stator 18 in the axial direction D1. The first protrusion 240A has a certain shape that curves along a circular arc, as viewed along the axial direction D1.

### PRODUCTION METHOD OF MOTOR 10

A production method of the motor 210 in the second embodiment will be described with reference to FIG. 6 and FIG. 7. The step of temporarily expanding the inner circumferential surface 238 of the central housing 230 to the outer side in the radial direction D2 and the step of disposing the outer circumferential surface 20 of the stator 18 such that the outer circumferential surface 20 of the stator 18 faces the expanded inner circumferential surface 238 are the same as those in the first embodiment, and therefore, the descriptions of the steps are omitted.

After the outer circumferential surface 20 of the stator 18 is disposed so as to face the expanded inner circumferential surface 238 of the central housing 230, the central housing 230 is cooled, and thereby, the inner circumferential surface 238 of the central housing 230 is contracted to the inner side in the radial direction D2. In FIG. 6, the position of a central portion of a second protrusion 240B of the central housing 230 in the circular direction D3 does not coincide with the position of the central portion of the first groove 24 of the stator 18 in the circular direction D3. In this case, the central housing 230 and the stator 18 are relatively displaced in the circular direction D3, by the force that is generated between the second protrusions 240B and the inner surface of the first groove 24 that abut on each other. Further, the contraction of the inner circumferential surface 238 of the central housing 230 causes a part of the inner circumferential surface 238 to abut on the outer circumferential surface 20 of the stator 18. In the embodiment, the inner circumferential surface 238 is contracted such that the second protrusion 240B of the central housing 230 is not plastically deformed. As a result, as shown in FIG. 6, an innermost portion of the second protrusion 240B of the central housing 230 in the radial direction D2 abuts on an innermost portion of the first groove 24 of the stator 18 in the radial direction D2. Therefore, the shape of the second protrusion 240B (see FIG. 7) before the stator 18 is fixed to the central housing 230 and the shape of the first protrusion 240A after the stator 18 is fixed to the central housing 230 are the same as each other.

As described above, in the step of causing the inner circumferential surface 238 of the central housing 23 to abut on the outer circumferential surface 20 of the stator 18, the second protrusion 240B (an example of the "protrusion") is not plastically deformed.

In the above configuration, it is possible to reduce the contact area between the second protrusion 240B and the inner circumferential surface 238, compared to a configuration in which the second protrusion 240B is plastically deformed. Accordingly, it is possible to further relax the pressure that acts on the stator 18.

### THIRD EMBODIMENT

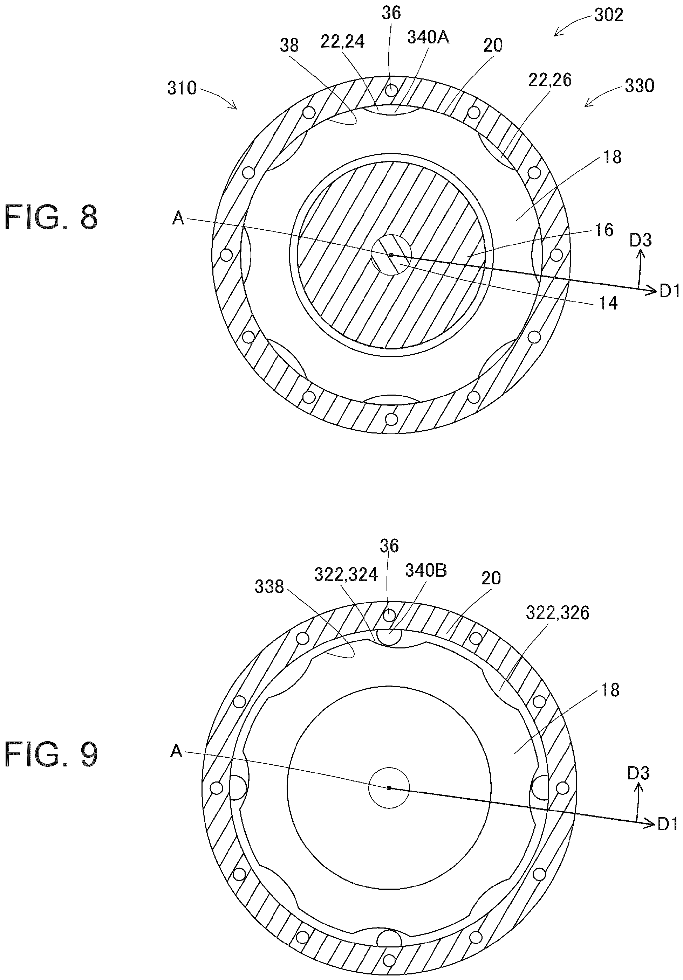

A drive device 302 in a third embodiment will be described with reference to FIG. 8. In the drive device 302 in the embodiment, the configuration of a central housing 330 of a motor 310 is different from the configuration of the central housing 30 of the motor 10 in the first embodiment.

A plurality of first protrusions 340A that protrudes to the inner side in the radial direction D2 is provided on an inner circumferential surface 338 of the central housing 330. In FIG. 8, to facilitate understanding, the plurality of first protrusions 340A is shown in gray. The plurality of first protrusions 340A extends along the axial direction D1. The plurality of first protrusions 340A is arrayed at regular intervals in the circular direction D3. In the embodiment, four first protrusions 340A are provided on the inner circumferential surface 338. The interior of the first groove 24 of the stator 18 is filled with the first protrusion 340A. That is, the first protrusion 340A and the first groove 24 contact with each other without space. Therefore, the first protrusion 340A has a shape corresponding to the first groove 24, as viewed along the axial direction D1.

### PRODUCTION METHOD OF MOTOR 10

A production method of the motor 310 in the third embodiment will be described with reference to FIG. 8 and FIG. 9. The descriptions of the step of temporarily expanding the inner circumferential surface 338 of the central housing 330 to the outer side in the radial direction D2 and the step of disposing the outer circumferential surface 20 of the stator 18 such that the outer circumferential surface 20 of the stator 18 faces the expanded inner circumferential surface 338 are omitted similarly to the second embodiment.

As shown in FIG. 9, after the outer circumferential surface 20 of the stator 18 is disposed so as to face the expanded inner circumferential surface 338 of the central housing 330, the central housing 330 is cooled, and thereby, the inner circumferential surface 338 of the central housing 330 is contracted to the inner side in the radial direction D2. In FIG. 9, the position of a central portion of a second protrusion 340B of the central housing 330 in the circular direction D3 does not coincide with the position of the central portion of the first groove 24 of the stator 18 in the circular direction D3. In this case, the central housing 330 and the stator 18 are relatively displaced in the circular direction D3, by the force that is generated between the second protrusion 340B and the inner surface of the first groove 24 that abut on each other. Further, the contraction of the inner circumferential surface 338 of the central housing 330 causes a part of the inner circumferential surface 338 to abut on the outer circumferential surface 20 of the stator 18. Furthermore, in response to the abutting on the inner surface of the first groove 24 of the stator 18, the second protrusion 340B of the central housing 330 is squashed. That is, the second protrusion 340B is plastically deformed. In the embodiment, the inner circumferential surface 338 of the central housing 330 is contracted such that the interior of the first groove 24 of the stator 18 is filled with the second protrusion 340B of the central housing 330. As a result, as shown in FIG. 8, the interior of the first groove 24 of the stator 18 is filled with the first protrusions 340A.

As described above, as shown in FIG. 8, the first protrusion 340A (an example of the "protrusion") and the first groove 24 contact with each other without space.

In the above configuration, it is possible to increase the contact area between the first protrusion 340A and the first groove 24, compared to a configuration in which the first protrusion 340A and the first groove 24 contact with each other with space. Therefore, the first groove 24 makes it possible to securely fix the stator 18 to the housing 12. Further, in the configuration in which the stator 18 is cooled using the refrigerant system of the housing 12, when the contact area between the housing 12 and the stator 18 increases, the heat transference is enhanced. That is, it is possible to enhance the cooling performance. In the above configuration, compared to the configuration where the first protrusion 340A and the first groove 24 contact with each other with space, the contact area between the first protrusion 340A and the first groove 24 increases, and therefore, the contact area between the housing 12 and the stator 18 also increases. Accordingly, it is possible to enhance the cooling performance.

Further, in the step of causing the inner circumferential surface 338 to abut on the outer circumferential surface 20 of the stator 18, the first groove 24 is filled with the elastically deformed first protrusion 340A without space.

In the above configuration, the contact area between the second protrusion 340B and the first groove 24 increases, and therefore, it is possible to securely fix the stator 18 to the housing 12. Further, as described above, it is possible to enhance the cooling performance, in the configuration in which the stator 18 is cooled using the refrigerant system of the housing 12.

The specific examples of the technology disclosed in the present specification have been described above. The specific examples are just examples, and do not limit the claims. The technology described in the claims includes various modifications and alterations of the above-described specific examples.

### FIRST MODIFICATION

In each of the above embodiments, one first protrusion 40A, 240A, 340A exists in one first groove 24. A plurality of first protrusions 40A, 240A, 340A may exist in one first groove 24.

### SECOND MODIFICATION

The plurality of first protrusions 40A, 240A, 340A does not need to be arrayed at regular intervals in the circular direction D3.

### THIRD MODIFICATION

The plurality of grooves 22 does not need to be arrayed at regular intervals in the circular direction D3.

### FOURTH MODIFICATION

The first protrusion 40A, 240A, 340A does not need to extend along the axial direction D1. That is, the first protrusion 40A, 240A, 340A may be provided at a part of the interior of the first groove 24 in the axial direction D1. As an example, the first protrusion 40A, 240A, 340A may be provided only at a central portion of the first groove 24 in the axial direction D1.

### FIFTH MODIFICATION

As the shape of the protrusion that exists in each first groove 24, a different shape may be adopted. For example, the sectional shape of the protrusion that exists in each first groove 24 may be a triangle or the like. Further, as the shape of each first groove 24, a different shape may be adopted so as to correspond to the shape of the protrusion.

Further, technical elements described in the present specification or the drawings exert technical utility independently or by various combinations, and are not limited to the combinations described in the claims. Further, the technology exemplified in the present specification or the drawings can concurrently achieve a plurality of purposes, and has technical utility simply by achieving one purpose of the plurality of purposes.

## Claims

1. A motor (10; 210; 310) comprising:
a housing (12) that includes an inner circumferential surface (38; 238; 338) having a cylindrical shape; and
a stator (18) that includes an outer circumferential surface (20) that abuts on the inner circumferential surface (38; 238; 338) from an inner side in a radial direction, wherein:
the stator (18) includes grooves (22) on the outer circumferential surface (20), the grooves (22) each extending along an axial direction and being arrayed along a circumferential direction;
the housing (12) includes at least one protrusion (40A; 240A; 340A) on the inner circumferential surface (38; 238; 338), the protrusion (40A; 240A; 340A) abutting on an inner surface of one of the grooves (22); and
the grooves (22) include at least one first groove (24) on which the protrusion (40A; 240A; 340A) abuts and a second groove (26) on which the protrusion (40A; 240A; 340A) does not abut.

2. The motor (10; 210) according to claim 1, wherein the protrusion (40A; 240A) and the first groove (24) partially contact with each other.

3. The motor (310) according to claim 1, wherein the protrusion (340A) and an inner surface of the first groove (24) wholly contact with each other.

4. The motor (10; 210; 310) according to claim 1, wherein:
the housing (12) includes a plurality of protrusions (40A; 240A; 340A) on the inner circumferential surface (38; 238; 338); and
the plurality of protrusions (40A; 240A; 340A) is arrayed at regular intervals in the circumferential direction.

5. The motor (10; 210; 310) according to claim 4, wherein the grooves (22) are arrayed at regular intervals in the circumferential direction.

6. The motor (10; 210; 310) according to claim 1, wherein the protrusion (40A; 240A; 340A) extends along the axial direction.

7. The motor (10; 210; 310) according to claim 6, wherein the protrusion (40A; 240A; 340A) includes a taper section where a protrusion height from the inner circumferential surface (38; 238; 338) increases toward one side in the axial direction.

8. The motor (10; 210; 310) according to claim 1, wherein the housing (12) holds the stator (18) by interference fit.

9. A production method of a motor (10; 210; 310), comprising:
expanding an inner circumferential surface (38; 238; 338) of a housing (12) to an outer side in a radial direction;
disposing an outer circumferential surface (20) of a stator (18) such that the outer circumferential surface (20) faces the inner circumferential surface (38; 238; 338) of the housing (12); and
contracting the inner circumferential surface (38; 238; 338) of the housing (12), to cause the inner circumferential surface (38; 238; 338) to abut on the outer circumferential surface (20) of the stator (18), wherein:
the stator (18) includes grooves (22) on the outer circumferential surface (20), the grooves (22) each extending along an axial direction and being arrayed along a circumferential direction;
the housing (12) includes at least one protrusion (40B; 240B; 340B) on the inner circumferential surface (38; 238; 338), the protrusion (40B; 240B; 340B) abutting on an inner surface of one of the grooves (22);
when the stator (18) is disposed so as to face the housing (12), positioning of the housing (12) and the stator (18) in the circumferential direction is performed such that the protrusion (40B; 240B; 340B) faces one of the grooves (22); and
when the housing (12) is caused to abut on the stator (18), the protrusion (40B; 240B; 340B) is caused to abut on at least one first groove (24) of the grooves (22) and not to abut on a second groove (26) of the grooves (22).

10. The production method according to claim 9, wherein when the housing (12) is caused to abut on the stator (18), the housing (12) and the stator (18) are relatively displaced in the circumferential direction, by force that is generated between the protrusion (40B; 240B; 340B) and an inner surface of the first groove (24) that abut on each other.

11. The production method according to claim 9, wherein when the housing (12) is caused to abut on the stator (18), at least a part of the protrusion (40B; 340B) is plastically deformed by abutting on the first groove (24).

12. The production method according to claim 11, wherein when the housing (12) is caused to abut on the stator (18), the first groove (24) is filled with the protrusion (340A) without space.

13. The production method according to claim 9, wherein when the housing (12) is caused to abut on the stator (18), the protrusion (240B) is not plastically deformed.
